Europäisches Patentamt

(19) European Patent Office

Office européen des brevets

(11) Publication number: **0 103 028**
B1

# (12) EUROPEAN PATENT SPECIFICATION

(45) Date of publication of patent specification: **03.09.86**

(21) Application number: **83900853.9**

(22) Date of filing: **14.03.83**

(86) International application number:
**PCT/JP83/00079**

(87) International publication number:
**WO 83/03325 29.09.83 Gazette 83/23**

(51) Int. Cl.⁴: **H 02 P 5/00,** G 05 D 13/00,
G 11 B 19/24

(54) **SPEED CONTROL CIRCUIT FOR MOTOR.**

(30) Priority: **18.03.82 JP 44252/82**
**26.04.82 JP 70673/82**
**26.04.82 JP 70674/82**
**12.01.83 JP 3653/83**

(43) Date of publication of application:
**21.03.84 Bulletin 84/12**

(45) Publication of the grant of the patent:
**03.09.86 Bulletin 86/36**

(84) Designated Contracting States:
**DE GB**

(56) References cited:
**JP-A-56 071 856**

(73) Proprietor: **SANYO ELECTRIC CO., LTD.**
**18, 2 chome, Keihan-Hondori**
**Moriguchi-shi Osaka 570 (JP)**

(73) Proprietor: **Tottori Sanyo Electric Co., Ltd.**
**201 Yoshikata Tottori-shi**
**Tottori 680 (JP)**

(72) Inventor: **SUMI, Yasuaki**
**128, Mihagino 1-chome**
**Tottori-shi Tottori 689-02 (JP)**

(74) Representative: **Glawe, Delfs, Moll & Partner**
**Patentanwälte**
**Postfach 26 01 62 Liebherrstrasse 20**
**D-8000 München 26 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The invention relates to a motor velocity control circuit for a motor driving a disc at predetermined constant linear velocity, comprising a reference oscillator producing a reference signal, means responsive to data signal detected from said disc to produce a comparison signal, a phase comparison means receiving said reference signal and comparison signal and phase-comparing both signals and producing an error output, and drive control means controlling the motor responsive to said error signal.

A circuit of this type, wherein additionally the means to produce a comparison signal comprises a demodulated clock signal generator generating a demodulated clock signal synchronous to said data signal and said demodulated clock signal generator includes a voltage controlled oscillator and control voltage generating means responsive to said data signal has been known from US—A—4 338 683.

A problem in this type of velocity control circuit is that a demodulated clock signal can not be reliably obtained from the detected data signal unless the disc is rotating approximately with the desired constant linear velocity. This is particularly true in the case of the commercial compact disc digital audio system where audio information is recorded on the disc in digital form represented by minute hollows or pits which are scanned by a laser ray to produce a pulse code modulated data signal and the demodulated clock signal is obtained by detecting the maximum length of the data signal pulses. This means that especially during the starting of the motor a reliable demodulated clock signal for phase-comparison is not available. For this reason, in the prior art circuit according to US—A—4 338 683 and additional control circuit for the motor is provided including a frequency comparator comparing the suitably divided frequencies of the demodulated clock signal with a reference signal for coarse controlling the motor rotation, and the phase-comparison circuit is for precise controlling the motor at the constant linear velocity. This results in a more complicated circuit.

From GB—A—2 076 185 there has been known a circuit of a similar type wherein phase-comparison of a demodulated clock signal obtained from the disc and of a reference signal is used for controlling the motor not only during constant rotation, but also during the starting period, thereby avoiding an additional rotation control circuit. However, this prior art system, which is for controlling the disc at constant angular speed, uses a special rotational speed control signal additionally recorded on the disc in the form of a carrier modulated with a frequency related to the horizontal scanning frequency of the video signal. Therefore, this system can not be used for controlling commercial compact audio discs which do not have this additional rotational speed control signal recorded.

It is an object of the invention to provide a motor velocity control circuit of the aforementioned kind which permits to control the motor during both the starting period and the constant rotation period with the same phase-comparison control circuit without requiring an additional control circuit or a special speed control signal recorded on the disc.

A first solution of this object is claimed in claim 1 and is based on the concept of using the data signal during the starting period and the demodulated clock signal during the constant rotation period as the comparison signal.

A second solution of the object is claimed in claim 2 and is based on the concept of using the data signal as a comparison signal during both the starting and constant rotation periods and using a reference signal particlarly adapted to the frequency spectrum of the data signal encountered in the compact disc digital audio system.

A third solution of the object is claimed in claim 3 and is based on the concept of using the demodulated clock signal as the comparison signal during the periods of starting and constant rotation and to provide means for changing the characteristics of the demodulated clock signal generator to adapt to the different conditions in the starting and constant rotation periods.

The dependent claims 4 to 8 relate to further advantageous features of the invention.

Preferred embodiments of the invention will be described with reference to the drawings.

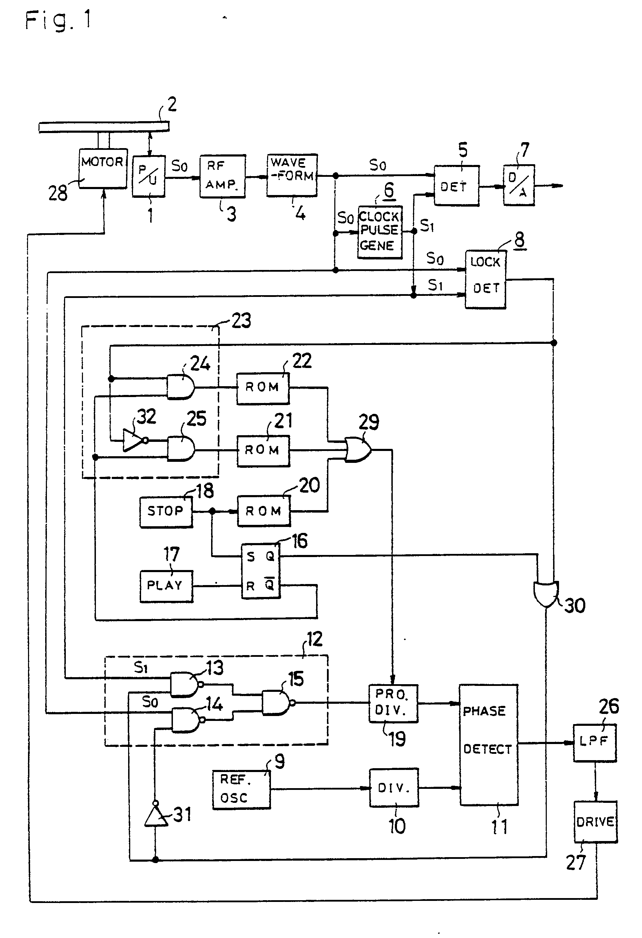

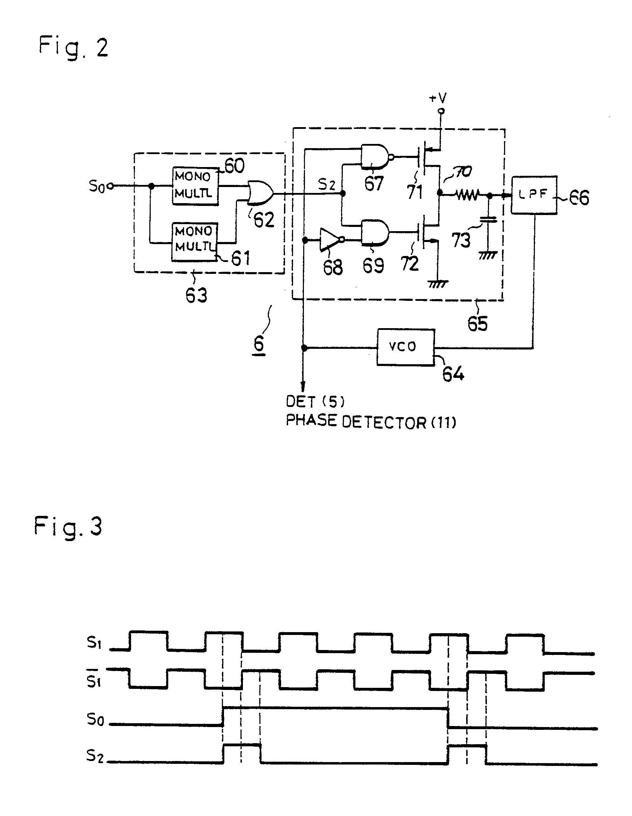

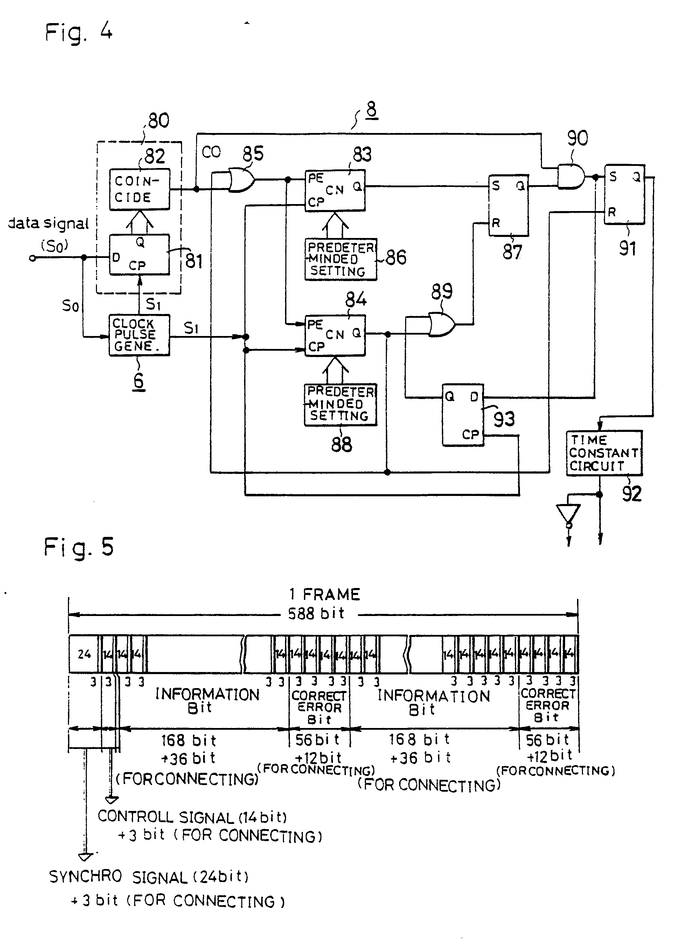

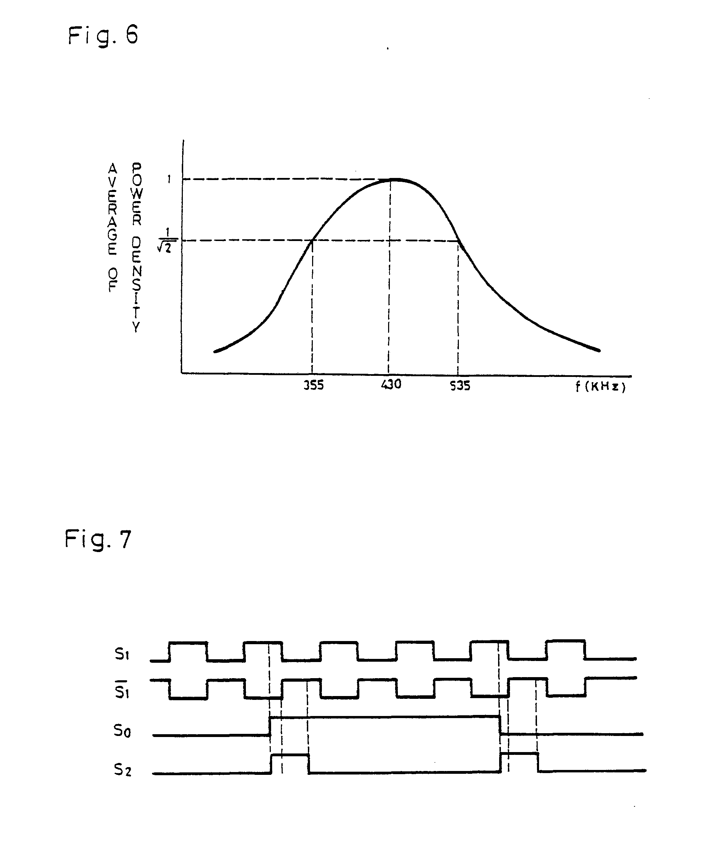

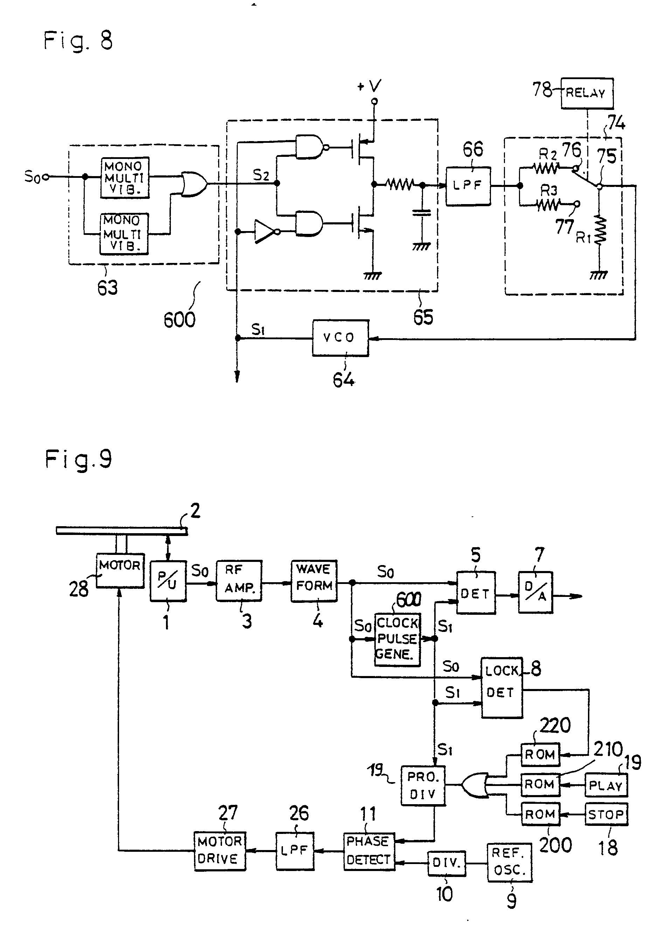

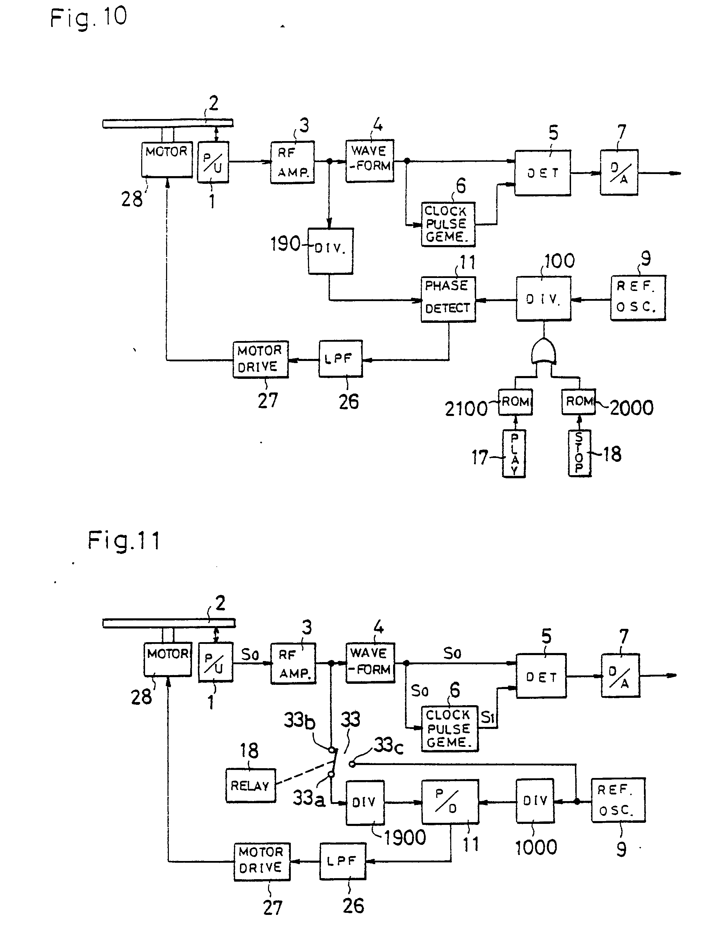

Fig. 1 is a block diagram of a first embodiment of a motor velocity control circuit, Fig. 2 is a block diagram of a modulated clock signal generator in Fig. 1, Fig. 3 an output wave form chart of the principal signals appearing in the demodulated clock signal generator in Fig. 2, Fig. 4 is a block diagram of a lock detector of Fig. 1, Fig. 5 is a structural representation of frame data, Fig. 6 is a graph showing the frequency spectrum of data signal, Fig. 7 is a wave form chart of each component at the demodulated clock signal generator for explanation of the invention, Fig. 8 is a block diagram of an improved demodulated clock signal generator of the invention in Fig. 2, Fig. 9 is a block diagram of a second embodiment of the motor velocity control circuit of the invention, Fig. 10 is a block diagram of a third embodiment of the invention, and Fig. 11 is a block diagram of a modification of the embodiment shown in Fig. 10.

### Best mode for carrying out the invention

In the motor velocity control circuit shown in Fig. 1 reference numeral 1 designates a pickup which projects a laser ray to a disc 2 to reproduce information recorded thereon. A data signal $S_0$ detected by the pickup 1 is given to a demodulator 5 and a demodulated clock signal generator 6 through a radio frequency amplifier 3 and a wave-form shaping circuit 4. The demodulated clock signal generator 6 generates a demodulated clock frequency (of 4.3218 MHz)

signal $S_1$ synchronized with the data signal $S_0$, the generated pulse output being given to the demodulator 5 in which the data signal $S_0$ is detected as to its length on the basis of demodulated signal $S_1$, thereby outputting binary digit data corresponding to length of data signal $S_0$. The data detected by the pickup 1 is defined to be of 3 to 11 bits of reference frequency (4.3218 MHz) corresponding to the signal level, whereby the demodulator 5 outputs the binary digit data corresponding to length of data signal $S_0$, i.e., signal level.

Reference 7 designates an analog-digital converter for converting the binary digital data from the demodulator 5 into an analog signal which is amplified by an amplifier (not shown) and thereafter reproduced by a loud-speaker. Reference numeral 8 designates a lock detector which is given the data signal $S_0$ and demodulated signal $S_1$ in synchronism therewith and detects the predetermined linear velocity rotation of disc 2. Numeral 9 designates a reference oscillator for generating the reference frequency (4.3218 MHz) signal, the output of oscillator 9 being divided by 160 by a frequency divider 10 to thereby feed a reference signal of about 27 kHz to a phase comparator 11. Numeral 12 designates a switching control circuit comprising a NAND gate 13 whose one input is given the demodulated clock signal $S_1$ and the other input is given the output of lock detector 8, a NAND gate 14 whose one input is given the data signal $S_0$ and the other input is given an inverted output of lock detector 8, and a NAND gate 15 receiving the outputs of NAND gates 13 and 14, the switching control circuit 12 being adapted to output either the demodulated clock signal $S_1$ or the data signal $S_0$ responsive to the output of lock detector 8. 16 designates a flip-flop which is reset by operating a play key 17 and set by operating a stop key 18 and stores the memory state, and 19 designates a programmable divider which is set to the dividing ratio data stored in ROM20, corresponding to dividing ratio "100", upon operation of a stop key 18 and is set by a selector 23 to the outputs of ROMs 21 and 22, in which the dividing ratio data "16" and "160" are stored upon operation of a play key 17. The selector 23 comprises an AND gate 24 receiving at the first input the $\bar{Q}$ output of flip-flop 16 and at the second input the output of lock detector 8 and an AND gate 25 receiving at the first input thereof the $\bar{Q}$ output of flip-flop and at the second input the inverted output of lock detector 8, and selects ROMs 21 and 22 responsive to the output of lock detector 8 to thereby select the dividing data to be set in the programmable divider 19. A phase comparator 11 receives the outputs of dividers 10 and 19 so as to generate an error voltage corresponding to the phase difference between both inputs. 26 designates a low-pass filter which generates a DC voltage corresponding to the error voltage from the phase comparator 11, and the output thereof is supplied to drive circuit 27 to control the number of rotations of motor 28.

In addition, reference numerals 29 and 30 designate OR gates 31 and 32 designate inverters.

Fig. 2 is a block diagram of the demodulated clock signal generator 6 shown in Fig. 1. The demodulated clock signal generator 6 comprises: a pulse oscillator 63 comprising a one shot multivibrator 60 operating at the leading edge of data signal detected by the pickup 1, a one shot multivibrator 61 operating at the trailing edge of the same, and an OR gate 62 given the outputs of both multivibrators 60 and 61; a phase comparator 65 receiving the output $S_2$ of pulse oscillator 63 and that $S_1$ of a voltage control oscillator 64 multivibrating at a frequency near the reference frequency; and a low-pass filter 66.

The phase comparator 65 comprises a NAND gate 67 supplied at one input with the output $S_2$ of pulse oscillator 63 and at the other input directly with the output $S_1$ of voltage control oscillator 64, and AND gate 69 receiving the output $S_1$ through an inverter 68, and a charge pump 70 composed of a P-channel field-effect transistor (FET)71 supplied at the gate electrode with the output of NAND gate 67, and a N-channel FET 72 supplied at the gate electrode with the output of AND gate 69, so that charge-discharge control of a capacitor 73 connected between the node of FETs 71 and 72 and earth controls the voltage across the terminals of capacitor 73.

Therefore, the data signal $S_0$ detected by the pickup 1, when given to the demodulated clock signal generator 6, allows the phase comparator 65 to phase-compare the output $S_2$ of one shot multivibrator 60 operating at the leading edge of data signal $S_0$ with that $S_1$ of voltage control oscillator 64 in multivibration, at which time if both the outputs are locked in phase, the phase comparator 65, as shown in Fig. 3, detects by the NAND gate 67 the coincidence of output $S_2$ of one shot multivibrator 60 with that $S_1$ of voltage control oscillator 64. Although, at this time, the P-channel FET 71 is conductive to charge the capacitor 73, the coincidence of output $S_2$ of one shot multivibrator 60 with inverted output $\bar{S}_1$ of voltage control oscillator 64 is detected subsequently by the AND gate 69 and thus the N-channel FET 72 is conductive to discharge the capacitor 73; thus the time periods for discharge and charge, when phase is locked, become the same, whereby the capacitor 73 consequently is not changed in potential.

However, when the phase shifts, a difference is produced between the periods of time for charge and discharge so as to change the potential of capacitor 73 so that a voltage corresponding to the voltage difference is given to the voltage control oscillator 64 through the low-pass filter 66, thereby controlling the frequency of voltage control oscillator 64 to restore zero phase difference. Also, even at the trailing edge of data signal $S_0$, the aforesaid phase comparison is carried out between the output $S_2$ of one shot multivibrator 61 and the oscillation frequency $S_1$ of voltage control oscillator 64 to thereby carry out phase matching of voltage control oscillation frequency and data signal $S_0$, thus obtaining from the voltage control oscillator 64 the demodulated clock signal synchronized with data signal $S_0$.

Next, in Fig. 4, which is a block diagram of the lock detector 8 shown in Fig. 1, reference numeral 80 designates a frame synchronous signal detector detecting the frame synchronous signal pattern, i.e., the 24 bit frame synchronous signal pattern, of data signal reproduced from the disc 2. The detector 80 comprises, for example, a 24 bit shift register 81 and a coincidence circuit 82 whereby specific data set to the coincidence circuit 82, if coincident with each other, generate a coincidence output "CO". Reference numerals 83 and 84 designate programmable down counters having preset enable terminals (PE) preset by the output of an OR gate 85 and clock pulse input terminals (CP) receiving the demodulated clock signal $S_1$. The predetermined number "588–10=578" is preset to the programmable down counter 83 by a predetermined-number setting circuit 86 so that logic "1" is sent to the output terminal Q by down count to set the flip-flop 87. Similarly, the predetermined number "588+10=598" is preset to the programmable down counter 84 by a predetermined-number setting circuit 88, the Q output of counter 84 being given as a first input to OR gate 89, whose output is given to a reset terminal R of a flip-flop 87. Reference numeral 90 designates an AND gate whose one input receives the output of frame synchronous signal detector 80 and the other input the output Q of flip-flop 87, and 91 designates a flip-flop having a set terminal S receiving the output of AND gate 90 and a reset terminal R receiving the output Q of programmable down counter 84. The Q output of flip-flop 91 is supplied to the switching control circuit 12 in Fig. 1 through a time constant circuit 92 comprising an integration circuit.

Reference numeral 93 designates a D-flip-flop which has a data input terminal D receiving the output of AND gate 90 and a clock pulse input terminal CP receiving the demodulated clock signal $S_1$ and supplies its Q output as a second input to OR gate 89. Also, the programmable down counters 83 and 84 are so constituted that the predetermined number is preset by the down count output Q of "598" through OR gate 85.

Here, the frame data, as shown in Fig. 5, comprises the synchronous pattern signal bit of 24 bits absolutely not-appearing in EPM (Eight to Fourteen Modulation) at an information unit of 588 bits, the information bit of 336+72 bits (for connection), and the error correction bit of 112+24 bits (for connection), so that the data comprises 14 bits and between the data blocks is inserted the channel bit of 3 bits.

Hence, the frame data shown in Fig. 5, when fed successively to the frame synchronous signal detector 80, is shifted successively and stored on the basis of demodulated clock signal $S_1$.

Then, the coincidence output logic "1" is sent out by detecting the 24 bit frame synchronizing signal, the longest synchronous signal of data signal absolutely not appearing in EFM. The coincidence signal logic "1" sent out enables the programmable down counters 83 and 84 to be preset, whereby the predetermined number setting circuits 86 and 88 preset the predetermined numbers respectively. Then, the demodulated clock signal successively downcounts the number and at the down count of "588–10=578" the logic "1" output is given to the flip-flop 87 to be set. Accordingly, the AND gate 90 becomes stand-by to detect the synchronous signal for the subsequent frame.

Next, explanation will be given of the cases where the frame synchronous signal is extracted or not.

(i) The case where the frame synchronous signal is extracted.

When AND gate 90 is stand-by for frame synchronous signal detection is given the coincidence output "CO" from the frame synchronous signal detector 80, AND is effected to set the flip-flop 91 to thereby feed the signal "1" to the switching control circuit 12. Then, the "1" output from the D-flip-flop 93 at one lock later resets the flip-flop 87 through OR gate 89, whereby the AND gate 90 in stand-by for the synchronous signal detection is rendered not conductive so as to release the stand-by for detection of synchronous signal. Furthermore, the coincidence signal "CO" presets the programmable counters 83 and 84 through the OR gate 85. Hence, the predetermined number "588+10" is newly set in the programmable down counter 84 until the down count output Q of "588+10" is generated from the programmable down counter 84, and the down counting of programmable down counters 83 and 84 by the demodulated clock signal $S_1$ is carried out after the above preset. Then, at down count of "588–10=578", the programmable down counter 83 feeds the down count output Q=logic "1" to the flip-flop 87 and sets it, thus again putting the AND gate 90 in the stand-by for detecting the synchronous signal.

(ii) The case where the frame synchronous signal is not extracted.

When the coincidence output "CO" is not generated from the synchronous signal detector 80 for the period of time of "588+10" down count by the programmable down counter 84 to the AND gate 90 put in stand-by for detecting the synchronous signal by the down count output Q from the programmable down counter 83, the down count output Q of "588+10" of programmable down counter 84 forcibly presets the programmable down counters 83 and 84 through the OR gate 85. At the same time, the flip-flop 91 is reset, but not immediately to the switching control circuit 12 due to existance of time constant circuit 92. Hence, the logic "1" signal is generated from the lock detector 8 for the time period in which the time constant circuit 92 maintains the voltage and the demodulated clock signal $S_1$ is given to the programmable divider 19. In a case where the frame synchronous signal is not detected by the synchronous signal detector 80 for a time period longer than the voltage keeping period of time constant circuit 92, the output of lock detector 8 is inverted to whereby the output of switching control circuit 12 is switched to the data signal $S_0$.

Accordingly, when the rotation of disc 2 exceeds the range of follow-up capacity of the voltage controlled oscillator, the data synchronous signal cannot be properly demodulated, whereby extraction of the synchronous signal is not carried out and a coincidence output "CO", is not generated thus making the AND gate 90 not-conductive. As a result, the flip-flop 91 is not set.

The abovementioned operation is carried out continually during the rotation of disc 2.

Next, explanation will be given on how to control the speed of motor by the data signal $S_0$ reproduced from the disc 2 and by the reference oscillator 9 and how to control rotation of disc 2 at constant linear speed.

The data signal $S_0$ detected by the pick-up 1, as shown in Fig. 6, has frequency components of about 400 to 500 kHz at both sides of a center frequency of about 430 kHz (half width: lower limit 355 kHz and upper limit 535 kHz). This is based on the coding system of compact disc digital audio system and the frequency component at the peak 430 kHz is the signal corresponding to magnitude of 5 bits: As a result, continuously, the disc 2 reproduces the frequency component of 430 kHz with high probability and during a large percentage of time, whereby the motor can be driven and controlled paying attention to the 430 kHz frequency.

Next, explanation will be given of the operation of the invention during the starting, rotation at constant linear speed, and stop of the motor and speed variation thereof.

(i) When the motor starts

When the disc 2 is not rotating and the play key 17 is operated to reset the flip-flop 16 and the play condition is stored, since the motor does not yet rotate, the disc 2 generates no data signal $S_0$, or even if detected, the frequency is too low to obtain data, whereby the frame synchronous signal cannot be extracted. Hence, since the flip-flop 91 is reset as shown in Fig. 4, the output of lock detector 8 is given to the selector 23 to set the dividing ratio "16" of ROM 21 in the programmable divider 19. At the same time, NAND gate 13 and 14 are given signals of logic "0" and "1" and the data signal reproduced from the disc 2 is in condition of being sent out from the switching control circuit 12. Since the phase comparator 11 is not given data signal $S_0$, or even if given, the frequency is low, its output is sent out and increases the number of rotations of motor 28, thus starting it.

(ii) When the motor is rotating at constant linear speed.

The data signal detected by the pickup 1 following the start of motor 28 and divided by sixteen by the dividing data "16" of divider 19 is given to the phase comparator 11. The divider output based on the coding system of compact disc digital audio system, that is, the divided output of divider 19 is still lower than the reference signal of 27 kHz, thereby further increasing the number of rotations of motor 28.

Accordingly, when the disc 2 approaches the state of being driven at constant linear speed and the data signal $S_0$ is given to the demodulated clock signal generator 6, the voltage controlled oscillator 64 which has a follow-up capacity of only several percent with respect to fluctuation of the data signal $S_0$ begins to receive the data signal $S_0$ in the range of its follow-up capacity, and subsequently the demodulated clock signal generator 6 generates the demodulated clock signal $S_1$ synchronized with the data signal $S_0$. Then, in the lock detector 8 shown in Fig. 4, the data signal $S_0$ is given successively to the shift register 81 on the basis of the demodulated clock signal $S_1$, the coincidence output "CO" of frame synchronous signal by the coincidence circuit 82 supplies the logic "1" output to AND gate 90, the OR gate 85 sets the predetermined numbers to the programmable down counters 83 and 84, and the down count outputs thereof set the flip-flop 87. Then, AND is effected so that the output of AND gate 90 sets the flip-flop 91, whereby the lock detector 8 outputs the signal of logic "1". Hence, the dividing ratio data "160" of ROM 22 is read out from the selector 23, the same is set in the programmable divider 19, and the output of switching control circuit 12 is switched to send out the demodulated clock signal $S_1$.

Therefore, a signal of 27 kHz=4.3218 MHz divided by 160, is given from the divider 19 to the phase comparator 11 which carries out phase comparison with the reference signal of 27 kHz.

At this time, when the motor 28 for driving the disc 2 rotates at an improper number of rotations, for example, when the rotational speed somewhat lowers, according to Fig. 7 the phase of the data signal detected by the pickup 1 shifts rightwardly, so that the frequency of the demodulated clock signal becomes not coincident with 4.3218 MHz due to synchronization with data signal $S_0$.

Hence, in this invention, the plase comparator 11 compares the output of voltage controlled oscillator 64 with that of reference oscillator 9 comprising a quartz oscillator so that the motor drive circuit 27 controls corresponding to the comparison error output the number of rotations of motor 28 driving the disc 2 to make the demodulated clock signal to coincide with the reference signal of 4.3218 MHz from the reference oscillator 9. In other words, speed control of motor 28 for proper length of data signal $S_0$ detected by pickup 1 means that the number of rotations of the same is controlled to keep constant the linear velocity. Thus, the demodulator 5 is given the demodulated clock signal $S_1$ of 4.3218 MHz in synchronism with data signal $S_0$, length of data signal $S_0$ detected by the pickup 1 being detected to be demodulated in binary digit data.

(iii) When the motor stops

Next, upon operating the stop key 18 to finish the musical performance, the flip-flop 16 is set, its Q output of logic "1" being given to the switching control circuit 12 through OR gate 30. Consequently, the demodulated clock signal $S_1$ of demodulated clock signal generator 6 is sent out from the output of switching control circuit 12. Also, the operation of stop key 18 sets to the programmable divider 19 the dividing ratio: logic "100" from ROM 20. The programmable divider 19 feeds to the phase comparator 11 the output of voltage controlled oscillator 64 multivibrating in the neighborhood of 4.3218 MHz divided by 100, that is an output of 43 kHz. The frequency of 43 kHz, however, is far leading in phase and frequency with respect to the reference signal of 27 kHz, which is equivalent to rapid velocity of motor 28, so that the phase comparator 11 generates an error voltage for reducing the velocity, whereby the motor 28 is rapidly decelerated equivalent to a braking action. The voltage controlled oscillator 64 follows the lowered data signal to lower to the lower limit of the range of follow-up capacity, but the value is several percent of the central frequency, for example 4 MHz, so that the divided output has a higher level in comparison with the reference value, thereby further exerting the braking action to rapidly put the motor in the stop condition.

(iv) When the motor velocity varies

Next, explanation will be given on fluctuation of the motor velocity by some factors such as absence of information bit on the disc: especially a burst error exceeding the error correction capability or vibrations disturbing rotation of disc).

When the motor 28 velocity varies and the voltage controlled oscillator 64 at the demodulated clock signal generator 6 loses its follow-up capability with respect to fluctuation of data signal $S_0$, the output of lock detector 8 for detecting the constant speed rotation of motor 28 becomes logic "0". As a result, the output of switching control circuit 12 is put in condition of outputting the data signal $S_0$, the selector 23 selects ROM 21, and the dividing data "16" is set in the programmable divider 19. Hence, the phase comparator 11 is given the output of data signal $S_0$ divided by "16" from the divider 19 and phase-compares it with the reference signal of 27 kHz to thereby control the disc 2 at constant linear velocity until the voltage controlled oscillator 64 reaches the range of followup capability.

While the embodiment is constructed to change the dividing ratio of the divider 19 which divides the output of switching control circuit 12 it may alternatively be constructed to change the dividing ratio of divider 10 which divides the output of reference oscillator 9.

Also, in the embodiment, the frame synchronous signal in the data signal detected from the disc is detected to indicate the constant velocity rotation of the motor. This is effective in a large scale integrated circuit. The frequency of 430 kHz i.e. the main frequency component of the data signal on the basis of coding system of compact disc digital audio system, is detected from the high frequency amplifier 3 through a means, such as a filter, which, when used as the lock detector indicating the motor rotating at constant speed, is simple because of no particular extraction of synchronous signal.

The first embodiment of the invention, as described above performs rotational velocity control of motor during (i) the starting, (ii) rotation at constant linear velocity, (iii) stop and (iv) variation of rotational velocity of motor. For starting the motor, the data signal reproduced from the disc is compared in phase with the output of the reference oscillator, and paying attention to the frequency component of 430 kHz being the mean output on the basis of coding system of compact disc digital audio system, this frequency is divided by a proper value and phase-compared with the divided output of the reference oscillator, whereby the rotation of motor is controlled up to the predetermined linear velocity, where accurate data signal can be extracted from the disc. During the motor rotation at constant speed the demodulated clock signal synchronized with the data signal is phase-compared with the reference signal of reference oscillator, thereby controlling the disc to be driven at constant linear velocity.

By switching different inputs to the phase comparator when the motor starts and when it rotates at constant linear velocity the following problems are solved:

(i) The voltage controlled oscillator constituting the demodulated clock signal generator has a follow-up capability only of several percent with respect to the central frequency and cannot follow the large change of motor speed during the starting.

(ii) Although the disc rotation at constant linear velocity could also be done by phase comparison of the frequency component of 430 kHz of the data signal with the reference signal, the rotation fluctuation of motor would be larger than when driving the motor by phase comparison of the demodulated clock signal with the reference signal and therefor the reproduction characteristic might be impaired.

(iii) Since the voltage controlled oscillator, as described in Item (i) has several % follow-up capability with variation of data signal (for example, ±200 kHz with respect to the central frequency of 4.3218 MHz), it may happen that when the data signal during the constant speed rotation of disc is largely disturbed by some factors (for example, a lack of information bit on the disc, burst error, or vibrations disturbing the rotation of the disc), the disc escapes from the range of follow-up capability of the voltage control oscillator and would no longer be controlled at the predetermined number of rotations.

The first embodiment of the invention uses the switching control circuit 12, thereby solving all the above problems.

Next, an embodiment will be described where the voltage controlled oscillator has a sufficient follow-up capability with respect to variations of the data signal $S_0$, so that the demodulated clock signal $S_1$ in synchronism with the data signal phase-compared with the output of reference oscillator 9 by the phase comparator 11, is used to control the disc 2 not only when driven at constant linear velocity but also during the starting of motor. An improved demodulated clock signal generator 600 is shown in Fig. 8, in which reference numeral 74 designates a voltage divider connected to the output line of low-pass filter 66, the voltage divider 74 comprising a resistance $R_1$ grounded at one end and having at the other end a movable contact 75, and resistances $R_2$ and $R_3$ having fixed contacts 76 and 75 and connected in parallel to the output of low-pass filter 66. The resistance value is set to be $R_2 < R_3$ and a relay 78 energized by the lock detection output from the lock detector 8 is adapted to switch the contact 75 toward the resistance $R_3$. Hence, the voltage controlled oscillator 64, when the motor 28 starts, is controlled by a sufficiently large partial voltage $V \cdot R_1/(R_1+R_2)$ determined by a relatively small resistance $R_2$ and by resistance $R_1$, and is successively switched to relatively larger resistance $R_3$ corresponding to the switching signal from lock detector 8, thus operating at small amplitude $V \cdot R_1/(R_1+R_3)$.

Fig. 9 is a block diagram of a motor speed control circuit using the improved demodulated clock signal generator 600, in which the components identical with those in Fig. 1 are designated by the same reference numerals. Reference numeral 210 designates a ROM to which the dividing ratio data "180" is set, so that when a play key 17 is operated the output is read out to be set in the programmable divider 19. 200 designates a ROM to set the dividing ratio data "100" so that when a stop key 18 is operated the dividing ratio "100" is set in the divider 19.

In such construction, first the dividing ratio data "180" set to ROM 210 is set to the programmable divider 19 by operation of play key 17 so that the output of voltage control oscillator 64 multivibrating in the neighborhood of 4.3218 MHz is divided by the dividing data "180". As 4.3218 MHz÷180=24 kHz, the frequency and phase are lagging behind the divided output 27 kHz of reference oscillator 9, whereby the phase comparator 11 outputs a signal to increase the number of rotations of motor 28.

At this time an error voltage having a large variation width from the phase comparator 11 is applied to the motor 28 to rotatably drive the disc 2. As the resistance at the voltage divider 74 at the demodulated clock signal generator 600 is set to the smaller one $R_2$ the variation width thereof is large, whereby the voltage controlled oscillator 64 is controlled to follow up the variation. Next, when the motor 28 rotates to rotate the disc 2 sufficiently, the detection of the synchronous signal in the data signal $S_0$ causes sending out the lock detection output "1" from the lock detector 8, whereby the dividing ratio data "160" from ROM 220 is given to the frequency divider 19. Hence, a signal of 27 kHz is obtained from the frequency divider 19 to carry out phase comparison. In this case, when the motor 28 rotates at the predetermined speed, the output of frequency divider 19 is about equal to the reference signal so that the phase comparator 11 generates no error output, but if the motor rotates out of the predetermined speed, the demodulated clock signal frequency generated by the demodulated clock signal generator 600 shifts from the predetermined 4.3218 MHz, whereby an error voltage corresponding to the phase difference is generated from the phase comparator 11 to control the motor 28. The speed change of motor 28 restores the demodulated clock signal frequency to the predetermined 4.3218 MHz and the speed control of the same continued until no error output is generated from the phase comparator 11, thus carrying out the phase comparison constantly during the reproduction by the disc 2 and controlling the motor 28 at constant linear speed.

Next, when the stop key 18 is operated after the performance, ROM 200 feeds the dividing ratio "100" into the frequency divider 19 to rapidly lower the speed of motor 28 in a manner equivalent to a braking action, thus instantaneously stopping the motor 28 and keeping it stationary.

While aforesaid embodiment performs a phase comparison of the demodulated clock signal with the reference signal to control the motor to be driven at constant linear speed from the starting, a phase comparison of data signal $S_0$ reproduced from the disc with the reference signal can also be used. Embodiments of such drive control will be described in accordance with the drawings.

A third embodiment of the invention is shown in Fig. 10, in which reference numeral 190 designates a frequency divider which is given the data signal $S_0$ output from the high frequency amplifier 3 whose dividing ratio is set to "16", 100 designates a frequency divider which divides the output of reference oscillator 9 composed of a quartz oscillator generating the reference oscillation signal of 4.3218 MHz and is constituted to change the dividing ratio during the play and the stop, and 2100 and 2000 designate ROMs storing the dividing ratio data for frequency divider 100. ROM 2100 is adapted to feed the dividing ratio data "160" into the frequency divider 100, when the play key 17 is operated. The dividing ratio data "1600" is stored in ROM 2000 and set to the frequency divider 100 by operating the stop key 18. Thus, the dividing ratio of divider 100 is set normally to "160", whereby frequency divider 100 outputs the reference signal of 27 kHz.

The operation of this embodiment is as follows. At first, upon operating the play key 17, ROM 2100 feeds the dividing ratio data of "160" into the frequency divider 100, and a reference signal of 27 kHz corresponding to reference signal of 4.3218 MHz divided by 160 is given from the divider 100 to the phase comparator 11, but since the disc 2 is not yet rotating, the phase comparator 11 is not receiving a divided output of data signal $S_0$ from frequency divider 190, and therefore outputs an error signal to increase the number of rotations of motor 28, whereby the motor drive circuit 27 rapidly accelerates the rotation of the motor to obtain a short starting time. When the data signal $S_0$ is detected by the pickup 1 due to rotation of disc 2 following rotation of motor 28, the phase comparator 11 receives a signal of about 27 kHz from the data signal $S_0$ divided by 16 in the frequency divider 190 to thereby carry out phase comparison between this signal of about 27 kHz and the reference signal. In this case, when the speed of motor 28 reaches the predetermined value, the output of frequency divider 190 is about equal to the reference signal so that no error output is generated by phase comparator 11, but when the motor is out of the predetermined speed, the data signal $S_0$ output from the frequency divider 190 shifts from 27 kHz, whereby the motor 28 is controlled by an error voltage corresponding to the phase difference and generated from phase comparator 11, the speed control of motor 28 being carried out until the speed change thereof makes the error output from the phase comparator 11 disappear, thus constantly performing a phase comparison during the reproduction by the disc 2 to thereby control the motor 28 at constant linear speed.

Next, when the stop key 18 is operated after the performance of disc 2, ROM 2000 feeds the dividing ratio data "1600" into the frequency divider 100, whereby an output of 2.7 kHz is obtained from the frequency divider 100 and given to the phase comparator 11. At this time the output of frequency divider 190 is of 27 kHz and leads in phase with respect to the reference signal. This is equivalent to the speed of motor 28 being too high, whereby the motor 28 is rapidly reduced in speed or braked, thus instantaneously stopping the motor and keeping it stationary.

During this time, the output of frequency divider 190 is lowered as the frequency of data signal $S_0$ detected by pickup 1 is lowered following the reduced rotational speed, but since random pulses are generated the output of divider 190 will not become completely zero. Therefore, the dividing ratio of frequency divider 190 when the motor stops, needs only be decided in consideration of the random pulse frequency.

Although in this embodiment, the dividing ratio of divider 100 during the motor stop is set higher to thereby lower the reference signal, alternatively the reference signal may also be cut off.

Also, this embodiment instead of changing the dividing ratio of the divider 100 for dividing the reference signal, may alternatively be constructed to change the dividing ratio of divider 190 dividing the data signal.

In the embodiment shown in Fig. 11, frequency dividers 1000 and 1900 having a fixed preset dividing ratio are used to control the motor at the starting, constant speed rotation, and stop. The frequency divider 1900 is given the data signal $S_0$ output from the high frequency amplifier 3 through a changeover switch 33 and is set to the dividing ratio "16". The frequency divider 1000 divides the output of reference oscillator 9 comprising a quartz oscillator generating reference oscillation signal of 4.3218 MHz and now is set to the dividing ratio of "160' and is thus generating a reference signal of 27 kHz. The output of reference oscillator 9 can also be given to the other stationary contact 33c of the changeover switch 33 and then to the divider 1900. The changeover switch 33 is switched normally to the stationary contact 33b and adapted to be switched to the other stationary contact 33c by operation of stop key 18. In this modified embodiment a play key (not shown) at first is operated and the frequency divider 1000 feeds into the phase comparator 11 a reference signal of 27 kHz corresponding to the reference signal of 4.3218 MHz divided by 160, but since the disc 2 is not rotated, the phase comparator 11 is not receiving a divided output from divider 1900. Therefore, the phase comparator 11 generates an error output to increase the rotation of motor 28, whereby the number of rotations thereof is rapidly increased by the motor drive circuit 27 and a short starting time is obtained, thus driving the disc 2 at constant linear velocity. Next, when the performance of disc 2 is intended to be finished, the stop key 18 is operated to switch the contact 33a to the other stationary contact 33c at the changeover switch 33a, whereby the reference signal of reference oscillator 9 is divided by 16 to obtain 270 kHz. Hence, the phase comparator 11 generates error voltage so as to lower the motor 28 speed, thereby rapidly reducing the speed of motor 28 equivalent to a braking action thus instantaneously stopping the motor 28 and keeping it stationary. The dividing ratio of each frequency divider 1000 or 1900, which was described to be 160 and 16, is not limited thereto and needs only be decided corresponding to the frequency for phase comparison.

As seen from the above, the motor speed control circuit of the invention comprises a switching control circuit for alternatively switching the data signal detected by the pickup or a demodulated clock signal synchronized with the data signal to a divided output, a reference oscillator for generating the reference oscillation signal, phase comparison means comparing in phase the output of reference oscillator with that of the switching control circuit, and means for controlling the motor to be driven corresponding to an error output from the phase comparison means. When the motor starts, the output obtained by dividing the data signal detected by the pickup is phase-compared with the output of reference oscillator and the error output controls the number of rotations of motor, whereby the rotation of disc can be controlled to be driven at constant linear velocity. Paying attention to the frequency spectrum of data signal on the basis of the coding system of the compact disc digital audio system, the data signal detected by the disc, when the motor starts, is divided into proper values, the divided output being phase-compared with the reference signal, thereby enabling the starting of motor. As a result, the number of rotations of motor is included sufficiently within a range of several percent of the predetermined number of rotations of the same at constant linear velocity thereof, whereby the phase comparison of the demodulated clock signal in synchronism with the data signal with reference signal can drive the motor at constant linear velocity.

Therefore, there is no need of separately providing a circuit for driving the motor at about constant speed and a circuit for controlling the motor to be driven at constant linear velocity. The switching control circuit switches the signal given to the phase comparison means from the data signal detected properly from the disc to the demodulated clock signal synchronized with the data signal to enable the starting as well as the driving of the motor at constant linear velocity, thereby facilitating the digital process and integration. Also, the disc can be driven under control of the data signal up to near the predetermined linear velocity rotation, and when it reaches the neighborhood thereof, the switching control circuit automatically switches the data signal to the demodulated clock signal which has a smaller fluctuation range so that the demodulated signal is phase-compared with the reference signal, thereby obtaining rotation of motor with smaller variation and improving the reproduction characteristic.

In case that the disc during the performance abnormally shifts from the center from some factors, or the data signal largely varies, the voltage controlled oscillator of the demodulated clock signal generator shifts from the phase synchronizing loop to the limit of its follow-up capability. In this case, the output given to the phase comparator from the switching control circuit is switched to the divided output of data signal detected from the disc, so that the motor is controlled in rotation by the divided output of the frequency spectrum of data signal, whereby the number of rotations of motor is restored with ease into the range of several percent from the predetermined number of rotations thereof at constant linear velocity. Hence, the motor speed control circuit of the invention is of extremely high reliability.

Also, the dividing ratio of the frequency divider for the signal to be phase-compared is changed when the motor starts, rotates at constant speed and stops, thereby obtaining a short starting time of motor and a rapid stop thereof. The frequency to be used for phase comparison is set out of the audio frequency range whereby the reproduction characteristic is not adversely effected. Furthermore, since the synchronous signal in the disc is not used for drive control of motor at constant linear velocity, the disc is controllable to be driven at constant linear speed independently of lack of synchronous signal in the disc.

Industrial applicability

This invention is applicable to a speed control circuit for a motor to rotate a rotary medium at constant linear velocity. Paying attention to that the data signal reproduced from the disc on the basis of coding method of compact disc digital audio system is distributed over about 400—500 kHz around the frequency component of about 430 kHz frequency component (in other words, the peak of 430 kHz frequency component corresponding to magnitude of 5 bits of reference signal), the embodiments of the invention phase-compare the reference signal with the data signal reproduced from the disc and including the frequency spectrum reproduced with high generation percentage in probability, thereby having controlled the motor to be driven at constant linear velocity.

This is usable entirely to the motor by which the rotary medium, on which the data signal is previously recorded at constant linear velocity, is rotatably controlled thereat when reproduced. In other words, the data signal recording method having the peak component is expectable of rotational control at constant linear velocity when reproduced.

Hence, the invention is applicable to the rotary medium, such as video disc, on which data signal is recorded at constant linear velocity when recorded.

Furthermore, this invention drives and controls the motor by the phase comparison means in such a manner that the demodulated clock signal of 4.3218 MHz corresponding to the minimum information bit in synchronism with the data signal reproduced by the disc corresponds to the reference frequency signal (of 4.3218 MHz) of reference oscillator in a ratio of 1 to 1. However, for the rotary medium on which the data signal to be recorded on the disc is recorded to be integer times the minimum information bit, the reference frequency signal corresponding to the above information bit is set, the demodulated clock signal in synchronism with data signal reproduced from the rotary medium is constituted by the oscillator in multivibration in the neighborhood of the reference frequency signal, phase comparison means controls in comparison the demodulated clock signal in synchronism with the data signal demodulated by the oscillator so that the clock signal corresponds at a ratio of 1 to 1 to the reference frequency signal of the reference oscillator, and the control output of the comparison means drives the motor, thereby enabling rotational control of the rotary medium at constant linear velocity.

Accordingly, the rotary medium on which the data signal is recorded at integer times the minimum information bit is rotatably controllable at constant linear velocity by the circuit of the invention.

Furthermore, the rotary medium having the signal recorded thereon at integer times the minimum information bit and data signal recording method having the frequency component of the peak component, when the number of rotations of motor largely varies, or in some cases, phase-compares the data signal with the reference signal paying attention to the peak component at the recorded data signal to thereby drive-control the motor and rotatably control the rotary medium at constant linear velocity. Also, when the number of rotations of motor varies a little, or in some cases, the demodulated signal synchronized with the recorded data signal is phase-compared with the reference frequency signal to thereby drive-control the motor and rotatably control the rotary medium at constant linear velocity. Such method can further preferably rotatably control the rotary medium at constant linear velocity.

Hence, the rotary medium recording thereon data signal integer times as large as the minimum information bit by use of the recording method having the frequency component of the peak component is rotatably controllable at constant linear velocity.

## Claims

1. A motor velocity control circuit for a motor driving a disc at predetermined constant linear velocity,

comprising a reference oscillator (9) producing a reference signal,

means (6, 12) responsive to data signal detected from said disc (2) to produce a comparison signal,

a phase comparison means (11) receiving said reference signal and comparison signal and phase-comparing both signals and producing an error output, and drive control means (27) controlling the motor (28) responsive to said error signal, wherein said means to produce a comparison signal comprises a demodulated clock signal generator (6) generating a demodulated clock signal ($S_1$) synchronous to said data signal ($S_0$),

characterized in that said means to produce a comparison signal comprises switching control means (12) for alternatively switching said demodulated clock signal ($S_1$) or said data signal ($S_0$) to be supplied as a comparison signal to said phase comparison means (11),

said switching control means (6) being operable to select said data signal ($S_0$ to be the comparison signal at least during the starting of the motor (8) and to select said demodulated clock signal ($S_1$) to be the comparison signal at least during the constant linear velocity rotation of the disc (2).

2. A motor velocity control circuit for a motor driving a disc at predetermined constant linear velocity,

comprising a reference oscillator (9) producing a reference signal,

means (6, 12) responsive to data signal detected from said disc (2) to produce a comparison signal,

a phase comparison means (11) receiving said reference signal and comparison signal and phase-comparing both signals and producing an error output, and drive control means (27) controlling the motor (28) responsive to said error signal,

characterized in that said means to produce a comparison signal directly produces the detected data signal as the comparison signal and that said reference oscillator (9) produces the reference signal with a frequency substantially equal to the center frequency of the frequency spectrum of the data signal ($S_0$) detected at said constant linear velocity.

3. A motor velocity control circuit for a motor driving a disc at predetermined constant linear velocity,

comprising a reference oscillator (9) producing a reference signal,

means (6, 12) responsive to data signal detected from said disc (2) to produce a comparison signal,

a phase comparison means (11) receiving said reference signal and comparison signal and phase-comparing both signals and producing an error output, and drive control means (27) controlling the motor (28) responsive to said error signal,

wherein said means to produce a comparison signal comprises a demodulated clock signal generator (6) generating a demodulated clock signal ($S_1$) synchronous to said data signal ($S_0$),

said demodulated clock signal generator (600) including a voltage controlled oscillator (64) and control voltage generating means (65) responsive to said data signal,

characterized in that said control voltage generating means has a switchable voltage divider (74) connected between the output thereof and the voltage controlled oscillator (64) and comprises switching control means (78) to switch said voltage divider (74) to supply said control voltage to the voltage controlled oscillator with a large amplitude at least during the starting of the motor (28) and with a small amplitude at least during rotation of the motor (28) at said constant linear speed.

4. A circuit according to claim 1, characterized in that said switching control means (12) is additionally operable to select said data signal ($S_0$) to be the control signal when the speed of rotation of the motor fluctuates from said constant linear velocity by more than a predetermined range of fluctuation.

5. A circuit as claimed in any of claim 1, 2 or 3, wherein said comparison signal and said reference signal are supplied to said phase comparison means (11) through first and second frequency dividers (19, 10; 190, 100), respectively, characterized in that dividing ratio control means (20, 21, 22; 200, 210, 220; 2000, 2100) are provided to set at least one of said first and second frequency dividers to different dividing ratios during starting the motor, rotation at constant linear velocity and stopping the motor, respectively.

6. A circuit according to one of claims 1, 3, 4 or 5, characterized by comprising a lock detecting means (8) responsive to said data signal ($S_0$) and said demodulated clock signal ($S_1$) to detect rotation of the motor at said constant linear velocity and producing an output to operate said switching control means (12, 78) and/or said dividing ratio control means (21, 22; 220).

7. A circuit as claimed in any of claims 1, 2 or 3, wherein at least said comparison signal is supplied to said phase comparison means through a frequency divider (1900), characterized by switching means (18, 33) to alternatively connect the input of said frequency divider to said comparison signal or said reference signal,

said switching means (18, 33) being operable for stopping the motor to connect the frequency divider (1900) to the reference signal thereby supplying both inputs of said phase comparison means (11) with the reference signal differently frequency divided.

8. A circuit as claimed in any of claims, characterized that the frequency of the frequency divided comparison signal supplied to said phase comparison means (11) is selected to be higher than the audio frequency range and smaller than the limit response frequency of the motor (28).

**Patentansprüche**

1. Motorgeschwindigkeitssteuerschaltung für einen eine Platte mit einer vorbestimmten konstanten linearen Geschwindigkeit treibenden Motor, die aufweist einen ein Referenzsignal erzeugenden Referenzoszillator (9), auf von der Platte (2) kommende Datensignale ansprechende Einrichtungen (6, 12), die ein Vergleichssignal erzeugen, eine Phasenvergleichseinrichtung (11), die das Referenzsignal und das Vergleichssignal empfängt, einen Phasenvergleich beider durchführt und eine Fehlerausgabe erzeugt, und Antriebsüberwachungseinrichtungen (27) zur Steuerung des Motors (28) in Abhängigkeit von dem Fehlersignal, wobei die Einrichtung zur Erzeugung eines Vergleichssignals einen demodulierten Taktsignalgenerator (6), der ein demoduliertes Taktsignal ($S_1$) synchron zu dem Datensignal ($S_0$) erzeugt, aufweist, dadurch gekennzeichnet, daß die Einrichtung zur Erzeugung des Vergleichssignals aufweist Schaltsteuereinrichtungen (12) zur wählweisen Schaltung des demodulierten Taktsignals ($S_1$) oder des Datensignals ($S_0$), die als Vergleichssignale in die Phasenvergleichseinrichtung (11) eingegeben werden, wobei die Schaltkontrolleinrichtung (6) betreibbar ist zur Auswahl des Datentsignals ($S_0$) als Vergleichssignal, zumindest während des Startens des Motors (8), und zur Auswahl des demodulierten Taktsignals ($S_1$) als Vergleichssignal, zumindest während der Drehung der Platte (2) mit linearer konstanter Geschwindigkeit.

2. Motorgeschwindigkeitskontrollschaltung für einen eine Platte mit einer vorbestimmten konstanten linearen Geschwindigkeit antreibenden Motor, die aufweist einen ein Referenzsignal erzeugenden Referenzoszillator (9), auf von der Platte (2) kommende Datensignale ansprechende Einrichtungen (6, 12) zur Erzeugung eines Vergleichssignals, eine Phasenvergleichseinrichtung (11), die das Referenzsignal und das Vergleichssignal empfängt, einen Phasenvergleich beider Signale durchführt und eine Fehlerausgabe erzeugt, und Antriebssteuereinrichtungen (27) zur Überwachung des Motors (28), abhängig von dem Fehlersignal, dadurch gekennzeichnet, daß die Einrichtung zur Erzeugung des Vergleichssignals direkt das aufgenommene Datensignal als Vergleichssignal erzeugen und daß der Referenzoszillator (9) ein Referenzsignal erzeugt, mit einer Frequenz, die im wesentlichen gleich der Schwerpunktfrequenz des Frequenzspektrums des mit konstanter linearer Geschwindigkeit aufgenommenen Datensignals ist.

3. Motorgeschwindigkeitssteuerschaltung für einen eine Platte mit einer vorbestimmten konstanten linearen Geschwindigkeit antreibenden Motor, die aufweist einen ein Referenzsignal erzeugenden Referenzoszillator (9), auf von der Platte (2) kommende Datensignale ansprechende Einrichtungen (6, 12) zur Erzeugung eines Vergleichssignals, eine Phasenvergleichseinrichtung (11), die das Vergleichssignal und das Referenzsignal empfängt, einen Phasenvergleich beider Signale durchführt und eine Fehlerausgabe erzeugt, und Antriebssteuereinrichtungen (27) zur Steuerung des Motors (28) in Abhängigkeit von dem Fehlersignal, wobei die Einrichtungen zur Erzeugung eines Vergleichssignals einen demodulierten Taktsignalgenerator (6) zur Erzeugung eines demodulierten Taktsignals ($S_1$) synchron zu dem Datensignal ($S_0$) beeinhaltet, und der demodulierte Taktsignalgenerator (600) einen Spannungssteueroszillator (64) und Steuerspannungserzeugungseinrichtungen (65), die auf das Datensignal ansprechen, beinhaltet, dadurch gekennzeichnet, daß die Steuerspannungserzeugungseinrichtung zwischen ihrem Ausgang und dem Spannungssteuerungsoszillator (64) einen schaltbaren Spannungsteiler (74) aufweist und Schaltsteuereinrichtungen (78) zum Schalten des Spannungsteiler (74) zur Versorgung des Spannungssteueroszillators mit der Steuerspannung zumindest während des Startens des Motors (28) mit einer großen Amplitude und mit einer kleinen Amplitude zumindest während der Drehung des Motors (28) mit der konstanten linearen Geschwindigkeit aufweist.

4. Schaltung nach Anspruch 1, dadurch gekennzeichnet, daß die Schaltsteuereinrichtung (12) zusätzlich betreibbar ist zur Auswahl des Datensignals ($S_0$) als Kontrollsignals, wenn die Rotationsgeschwindigkeit des Motors um mehr als einen vorbestimmten Schwankungsbereich von der konstanten linearen Geschwindigkeit abweicht.

5. Schaltung nach einem der Ansprüche 1, 2 oder 3, wobei das Vergleichssignal und das Referenzsignal der Phasenvergleichseinrichtung (11) über einen ersten und einen zweiten Frequenzteiler (19, 10; 190, 100) zugeführt werden, dadurch gekennzeichnet, daß Telungsverhältnissteuereinrichtungen (20, 21, 22; 200, 210, 220; 2000, 2100) vergesehen sind, um zumindest einen der ersten oder zweiten Frequenzteiler während des Startens des Motors, der Rotation mit konstanter linearer Geschwindigkeit und des Anhaltens des Motors auf unterschiedliche Teilungsverhältnisse zu setzen.

6. Schaltung nach einem der Ansprüche 1, 3, 4 oder 5, dadurch gekennzeichnet, daß sie eine Sperrdetektierungseinrichtung (8) aufweist, die auf das Datensignal ($S_0$) und das demodulierte Taktsignal ($S_1$) zur Detektierung der Drehung des Motors mit konstanter linearer Geschwindigkeit anspricht und eine Ausgabe zum Betreiben der Schaltsteuereinrichtung (12, 78) und/oder der Telungsverhältnissteuereinrichtungen (21, 22; 220) erzeugt.

7. Schaltung nach Anspruch 1, 2 oder 3, wobei zumindest das Vergleichssignal der Phasenvergleichseinrichtung über einen Frequenzteiler (1900) zugeführt wird, gekennzeichnet durch Schalteinrichtungen (18, 33) zur wechselweisen Belegung des Eingangs des Frequenzteilers mit dem Vergleichssignal oder dem Referenzsignal, wobei die Schalteinrichtungen (18, 33) zum Anhalten des Motors betreibbar sind, um den Frequenzteiler (1900) mit dem Referenzsignal zu belegen und dabei beide Eingänge der Phasenvergleichseinrichtung (11) mit dem unterschiedlich frequenzgeteilten Referenzsignal zu versorgen.

8. Schaltkreis nach einem der vorstehenden Ansprüche, dadurch gekennzeichnet, daß die Frequenz des frequenzgeteilten Vergleichssignals das der Phasenvergleichseinrichtung (11) zugeführt wird, so ausgewählt ist, daß sie größer ist, als der Audiofrequenzbereich und kleiner ist als die Grenzfrequenz des Motors (28).

**Revendications**

1. Circuit de commande de la vitesse d'un moteur, pour un moteur qui entraîne un disque à une vitesse linéaire constante prédéterminée, comprenant un oscillateur de référence (9) qui produit un signal de référence, des moyens (6, 12) qui réagissent à un signal de données détecté à partir dudit disque (2) en produisant un signal de comparaison, des moyens de comparaison de phases (11) qui reçoivent le signal de référence et le signal de comparaison et comparent en phase ces deux signaux pour produire un signal d'erreur en sortie, et des moyens de commande d'entraînement (27) qui commandent le moteur (28) en réponse au signal d'erreur, les moyens produisant un signal de comparaison comprenant un générateur de signal d'horloge démodulé (6) qui produit un signal d'horloge démodulé ($S_1$) en synchronisme avec le signal de données ($S_0$), caractérisé en ce que les moyens produisant un signal de comparaison comprennent des moyens de commande de commutation (12) pour commuter alternativement le signal d'horloge démodulé ($S_1$) ou le signal de données ($S_0$) qui sera délivré en tant que signal de comparaison aux moyens de comparaison de phases (11), ces moyens de commande de commutation (6) pouvant fonctionner de manière à choisir le signal de données ($S_0$) en tant que signal de comparaison, au moins pendant le démarrage du moteur (8) et à choisir le signal d'horloge démodulé ($S_1$) en tant que signal de comparaison, au moins pendant la rotation du disque (2) à vitesse linéaire constante.

2. Circuit de commande de la vitesse d'un moteur, pour un moteur qui entraîne un disque à une vitesse linéaire constante prédéterminée, comprenant un oscillateur de référence (9) qui produit un signal de référence, des moyens (6, 12) qui réagissent à un signal de données détecté à partir dudit disque (2) en produisant un signal de comparaison, des moyens de comparaison de phases (11) qui reçoivent le signal de référence et le signal de comparaison et comparent en phase ces deux signaux pour produire un signal d'erreur en sortie, et des moyens de commande d'entraînement (27) qui commandent le moteur (28) en réponse au signal d'erreur, caractérisé en ce que les moyens produisant un signal de comparaison produisent directement le signal de données détecté en tant que signal de comparaison, et en ce que l'oscillateur de référence (9) produit le signal de référence à une fréquence sensiblement égale à la fréquence centrale du spectre de fréquences du signal de données ($S_0$) détecté à ladite vitesse linéaire constante.

3. Circuit de commande de la vitesse d'un moteur, pour un moteur qui entraîne un disque à une vitesse linéaire constante prédéterminée, comprenant un oscillateur de référence (9) qui produit un signal de référence, des moyens (6, 12) qui réagissent à un signal de données détecté à partir dudit disque (2) en produisant un signal de comparaison, des moyens de comparaison de phases (11) qui reçoivent le signal de référence et le signal de comparaison et comparent en phase ces deux signaux pour produire un signal d'erreur en sortie, et des moyens de commande d'entraînement (27) qui commandent le moteur (28) en réponse au signal d'erreur, les moyens produisant un signal de comparaison comprenant un générateur de signal d'horloge démodulé (6) qui produit un signal d'horloge démodulé ($S_1$) en synchronisme avec le signal de données ($S_0$), ce générateur de commande (65) qui réagissent au signal de données, caractérisé en ce que les moyens générateurs de tension de commande comportent un diviseur de tension commutable (74), monté entre leur sortie et l'oscillateur commandé par tension (64) et comprennent des moyens de commande de commutation (78) pour commuter le diviseur de tension (74) de telle manière qu'il délivre ladite tension de commande à l'oscillateur commandé par tension avec une grande amplitude au moins pendant le démarrage du moteur (28) et avec une faible amplitude au moins pendant la rotation du moteur (28) à ladite vitesse linéaire constante.

4. Circuit selon la revendication 1, caractérisé en ce que les moyens de commande de commutation (12) peuvent en outre fonctionner de manière à choisir le signal de données ($S_0$) en tant que: signal de commande lorsque la vitesse de rotation du moteur fluctue, par rapport à ladite vitesse linéaire constante, de plus qu'une plage prédéterminée de fluctuation.

5. Circuit selon l'une quelconque des revendications 1 à 3, dans lequel le signal de comparaison et le signal de référence sont délivrés aux moyens de comparaison de phase (11) par l'intermédiaire d'un premier et d'un second diviseurs de fréquence (19, 10; 190, 100) respectivement, caractérisé en ce que des moyens de commande du rapport de division (20, 21, 22; 200, 210, 220; 2000, 2100) sont prévus pour régler l'un au moins de ces premier et second diviseurs de fréquence à des rapports de division différents, respectivement pendant le démarrage du moteur, la rotation à vitesse linéaire constante et l'arrêt du moteur.

6. Circuit selon l'une quelconque des revendications 1, 3, 4 et 5, caractérisé en ce qu'il comprend des moyens détecteurs de maintien (8) qui réagissent au signal de données ($S_0$) et au signal d'horloge démodulé ($S_1$) pour détecter la rotation du moteur à ladite vitesse linéaire constante et qui produisent un signal de sortie pour actionner les moyens de commande de commutation (12, 78) et/ou les moyens de commande de rapport de division (21, 22; 220).

7. Circuit selon l'une quelconque des revendications 1 à 3, dans lequel le signal de comparaison au moins est délivré aux moyens de comparaison de phases par l'intermédiaire d'un diviseur de fréquence (1900), caractérisé par des moyens de commutation (18, 33) pour connecter alternativement l'entrée de ce diviseur de fréquence au signal de comparaison ou au signal de référence, ces moyens de commutation (18, 33) pouvant fonctionner, en vue de l'arrêt du moteur, de manière à connecter le diviseur de fréquence (1900) au signal de référence, les deux entrées des moyens de comparaison de phases (11) recevant ainsi le signal de référence divisé en fréquence différemment.

8. Circuit selon l'une quelconque des revendications 1 à 7, caractérisé en ce que la fréquence du signal de comparaison divisé en fréquence qui est délivré aux moyens de comparaison de phases (11) est choisie de manière à être plus élevée que la gamme de fréquences audibles et à être plus basse que la fréquence limite de réponse du moteur.

Fig. 1

0 103 028

Fig. 2

DET (5)
PHASE DETECTOR (11)

Fig. 3

## Fig. 4

## Fig. 5

1 FRAME
588 bit

| 24 | 14 | 14 | 14 | ... | 14 | 14 | 14 | 14 | 14 | 14 | 14 | ... | 14 | 14 | 14 | 14 | 14 | 14 | 14 | 14 | 14 |

INFORMATION Bit — 168 bit +36 bit (FOR CONNECTING)

CORRECT ERROR Bit — 56 bit +12 bit (FOR CONNECTING)

INFORMATION Bit — 168 bit +36 bit (FOR CONNECTING)

CORRECT ERROR Bit — 56 bit +12 bit (FOR CONNECTING)

CONTROLL SIGNAL (14 bit) +3 bit (FOR CONNECTING)

SYNCHRO SIGNAL (24 bit) +3 bit (FOR CONNECTING)

3

Fig. 6

Fig. 7

Fig. 8

Fig.9

0 103 028

Fig. 10

Fig.11

6